Europäisches Patentamt

European Patent Office

Office européen des brevets

(11) Publication number : **0 512 820 A1**

# (12) EUROPEAN PATENT APPLICATION

(21) Application number : 92304099.2

(22) Date of filing : 07.05.92

(51) Int. Cl.⁵ : **B65G 47/20, B26D 7/27, B26D 7/28**

(30) Priority : **08.05.91 GB 9109866**

(43) Date of publication of application :
**11.11.92 Bulletin 92/46**

(84) Designated Contracting States :
**DE GB**

(71) Applicant : **THURNE ENGINEERING CO LTD
Delta Close St. Faiths Industrial Estate
Norwich Norfolk NR6 6BG (GB)**

(72) Inventor : **Antonissen, Peter
The Old Forge, Oulton
Norwich, Norfolk NR11 6NX (GB)**
Inventor : **Hoyland, Trevor Barry
10 Maple Drive, Taverham
Norwich, Norfolk (GB)**

(74) Representative : **Rackham, Stephen Neil
GILL JENNINGS & EVERY 53-64 Chancery Lane
London WC2A 1HN (GB)**

(54) Fluffed portion preparation device.

(57)    A method and apparatus for fluffing thin slices of product to obtain a fluffed group of slices which are especially used for filling sandwiches. The device includes a high speed conveyor (2) which receives slices cut by a slicer and moves the slices downstream and projects the slices from the downstream end (3) of the conveyor (2). The slices (1) are intercepted in flight by a collector (6) such as a paddle wheel causing the individual slices (1) to concertina and collect into a fluffed group of slices. The fluffed group is deposited on an output conveyor (8) which conveys the group for further, downstream processing.

Fig.1.

EP 0 512 820 A1

Pre-packed sandwiches have been available for many years during which time a large variety of food products have been used as fillings. Some of the most popular fillings include sliced foodstuffs such as ham. Many methods have been proposed to improve the quality of the sandwiches and to improve their production rate by automating the sandwich making process.

Originally fillings were manually inserted between bread outers, for example two slices of bread or two previously split halves of a roll. A better looking sandwich can be made by having a reasonable match between the bread outers and the filling. When the filling is a sliced product, the slices usually had to be manually trimmed to give such a desired end result. This process is time consuming and labour intensive leading to a low production rate.

By using a number of very thin slices of product for the filling it has been found that the sandwiches have a greater appeal. Thin slices have the additional advantage that they are easy to fold to match the bread outers. A reasonable match between the filling and the bread outers can be achieved by using several slices of filling randomly folded between the bread outers. This type of filling is referred to as a fluffed group of slices. This method of filling gives a reasonable distribution of the filling without requiring manual trimming.

To produce sandwiches of this preferred type it is necessary to produce randomly folded groups of thin slices at a high rate. The weight of each fluffed group should meet legally enforced portion weights without exceeding these requirements leading to "give-away". Conventionally, a stream of thin slices fall onto a slowly travelling conveyor belt from which operators pick-up and weigh the slices into portions. When the portions are created there tends to be some disarray in the orientation of the slices and some folding of the slices. When a portion of the correct weight has been reached the operator transfers the portion onto a paper sheet or film, or onto a further conveyor for subsequent processing. Alternatively, the portion may be deposited directly onto a bread outer.

In this process the randomness of the folding of the slices depends upon the manual handling of the slices and this can vary greatly with corresponding differences between different fluffed portions. The process is also slow due to the time required for operators to make and weigh the portions. Another problem with the process is that of operator fatigue which leads to an increased number of underweight and overweight portions.

Systems for collecting food product into groups are known. GB-A-2,030,848 discloses a system for chopping rigid products such as noodles and then collecting the chopped noodles as they fall under gravity in a chute until a predetermined quantity of pieces has been collected. The predetermined quantity is then discharged from the collecting chute into packaging carried by an output conveyor. Conventional systems for providing packs of sliced products all provide either shingles or stacks of slices. For example US-A-3,831,471 discloses a flipper system onto which slices fall and form a stack directly from a slicer. When a predetermined number of slices has collected on the flipper, the flipper rotates through 180° to deposit the slices onto a conveyor leading to a packaging line.

According to this invention a fluffed portion preparation device comprises a high speed conveyor arranged to receive slices cut by a slicer and which, in use, moves them downstream at a rate which is sufficient for them to be projected forwards from its downstream end, a collector located at the downstream end of the high speed conveyor to intercept the slices projected forwards from its downstream end so that the individual slices concertina and are collected to form a fluffed group of slices, and an output conveyor onto which the collector deposits the fluffed group of slices.

The collector may include a bucket into which the slices are projected and which is arranged to tip out a portion of slices once collected. Preferably, however, the collector includes a paddle wheel arranged to rotate about a horizontal axis transverse to the feed direction of the high speed conveyor. Adjacent paddles of the paddle wheel form a collecting pocket which intercepts the flight of the slices as they are projected from the downstream end of the high speed conveyor. Once the correct weight of slices has been collected in one of the collecting pockets of the paddle wheel, the paddle wheel is rotated and indexed through an angle equal to the angle between adjacent paddles to bring the next, empty, pocket into the line of flight of the slices being projected from the downstream end of the high speed conveyor, and to deposit a previously collected fluffed group of slices onto the output conveyor. Preferably the paddle wheel rotates in essentially the same direction as that of the slices leaving the downstream end of a high speed conveyor and, in this case, the collector includes a stationary shield to prevent fluffed groups of slices from leaving their collecting pocket until the collecting pocket containing that group of slices has been indexed around to the lower half of the paddle wheel so that the slices can then fall under gravity onto the output conveyor.

The paddles of the paddle wheel may be made from an array of thin bars or strips or include cut-out portions to reduce the surface area which is in contact with the fluffed group of slices. Ham and similar materials are somewhat moist and slightly greasy and so tend to be slightly sticky and cling to smooth flat surfaces. By reducing the surface area in contact with a fluffed group of slices this sticking effect is minimized. Alternatively, the collector includes a flexible strip of material connected between the free ends of adjacent paddles to form a flexible collecting pocket. With such an arrangement the flexible material forms a hyperbolic curve as seen in cross-section so contains no sharp corners in which the groups of slices can get caught and also, since it is suspended only from the free ends of the paddles, tends to whip and flex as the paddle wheel is indexed so encouraging the fluffed groups of slices to fall once they reach the lower half of the paddle wheel. Such an arrangement ensures complete release of all of the slices in each group.

Typically, the high speed conveyor is arranged to receive slices directly from the output of a slicing machine. The collector may be arranged to be indexed as soon as a predetermined weight of slices has been accumulated. In this case, the fluffed portion preparation device is preferably electronically coupled to the slicing machine and includes a control to index the paddle wheel each time a predetermined number of slices are cut by the slicer. Usually, fluffed portions need to have a predetermined weight and this may be achieved either as a result of the slicing machine always slicing slices of a predetermined weight so that a predetermined number of slices must inevitably form a portion of a particular predetermined weight or, alternatively, by controlling the number of slices that are contained in each portion via a feedback loop including a check weigher which checks the weight of previously collected portions. Of course, the check weigher can be mounted upstream of the fluffed portion preparation device and, conceivably check the weight of each and every slice in turn and accumulate their weight until a predetermined weight is achieved but, in practice, it is much easier to mount a check weigher downstream of the collector and merely provide some form of feedback to control the number of slices contained in future groups in dependence upon the weight of previously collected groups of slices.

Examples of fluffed portion devices in accordance with this invention will now be described with reference to the accompanying drawings in which:-

Figure 1 is a side elevation of a fluffed portion preparation device;

Figure 2 is a side elevation of a first example of paddle wheel; and

Figure 3 is a side elevation of a second example of paddle wheel.

Slices of product 1 cut from a block of product 10 by a slicing machine 11 fall onto a high speed conveyor 2. The conveyor 2 travels at a high speed so that as the slices of product 1 fall onto it they tend to slip and so adopt a generally random orientation depending upon just which part of the slice first grips and moves with the high speed conveyor. Thus, the stream of slices being conveyed by the high speed conveyor 2 tend to have different orientations. The high speed conveyor moves at a speed which is sufficient so that on reaching the downstream end of the high speed conveyor the slices do not grip and adhere to the surf ace of the high speed conveyor as it turns around its downstream knife edge or roller but, instead, are projected forwards off the downstream end 3 of the high speed conveyor 2. As the slices fly forwards there is some tendency for them to fold and roll over themselves.

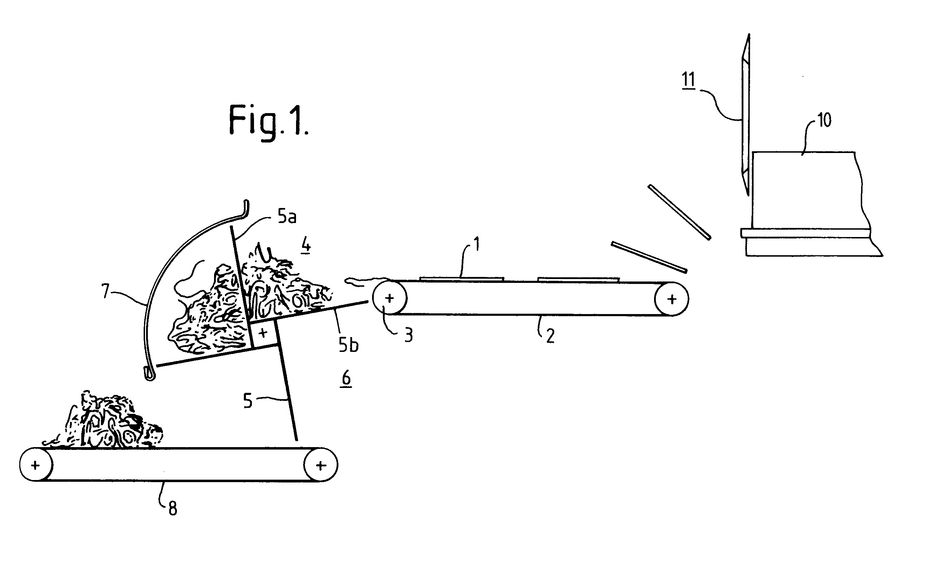

The slices on being projected off the downstream end 3 of the high speed conveyor 2 then fall into a pocket 4 formed between two adjacent paddles 5 of a paddle wheel 6. The paddle wheel 6 includes four equi-angularly spaced paddles 5 which are arranged so that one paddle 5a is generally upright whilst its neighbour is substantially horizontal to provide a collecting pocket 4. The flight of the slices 1 from the downstream end 3 of the conveyor 2 is thus intercepted by the pocket 4 with the slices colliding with the paddle 5a, or with previously collected slices. The slices thus tend to fold, crinkle and generally concertina in the collector 4 with a reasonably random distribution of the slices taking place, at least partly depending upon whether in being collected into the pocket 4 they engage previously collected slices or engage the paddle 5a. As soon as a portion is complete the paddle wheel 6 is rotated in an anticlockwise direction as seen in Figure 1 and indexed through 90° to bring the following pocket into the slice receiving position. As the paddle wheel 6 is rotated the paddles move in generally the same direction as the slices leaving the downstream end of the high speed conveyor 2.

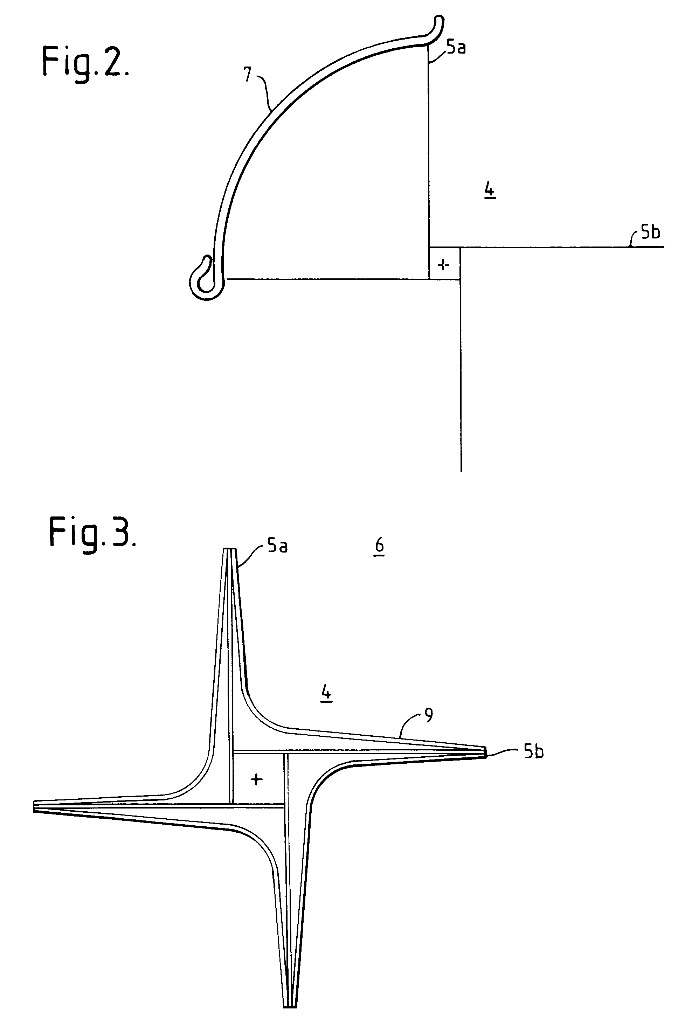

A stationary shield 7 surrounds a quadrant of the paddle wheel to ensure that none of the collected slices leave the collecting pocket until the collecting pocket has been indexed to its lower most position. As the paddle wheel 6 is rotated the pocket 4 moves out of the shield 7 and deposits the fluffed group of slices onto a stationary output conveyor 8. When a portion has been deposited and has settled on the output conveyor, the output conveyor is accelerated to discharge the portion onto automatic sandwich making machinery, not shown, or, deposits the portions onto separate sheets, films or packages. After discharging the portion the output conveyor is stopped ready to receive the next portion. The paddles 5 of the paddle wheel 6 may be formed by an array of individual rods or, flat surfaces including a number of apertures to reduce the contact area between the paddles 5 and the fluffed group of slices. When the slices are ham, or other cooked meat, they tend to be moist and slightly fatty and thus there is a tendency for them to cling to the surfaces of the paddle and, by reducing the contact area between the paddles and the fluffed group of slices this tendency can be reduced. However, it is preferred that the paddle wheel 6 is used in which webs of flexible material 9 suspended from the free ends of the paddles 5. Such a paddle wheel 6 is shown in Figure 3 in which, for clarity, all collecting pockets 6 are shown as if in their upright position. The webs of material 9 are typically made from a food compatible plastics material such as polyolefin. The webs of material are generally hyperbolic in cross-section which provides a gently curved base for each collecting pocket 4 so that firstly there is less tendency for the fluffed group of slices to get wedged into the corner between adjacent paddle wheels and secondly, the flexible nature of the web 9 and the fact that it is only connected by its free end means that as the paddle wheel 6 is rotated the web 9 tends to flex and whip so helping to dislodge and discharge the fluffed group of slices cleanly and ensuring that no slices are left in the pocket 4.

**Claims**

1. A fluffed portion preparation device comprising a high speed conveyor (2) arranged to receive slices (1) cut by a slicer and which, in use, moves them downstream at a rate which is sufficient for them to be projected forwards from its downstream end (3), a collector (6) located at the downstream end of the high speed conveyor (2) to intercept the slices (1) projected forwards from its downstream end so that the individual slices (1) concertina and are collected to form a fluffed group of slices, and an output conveyor (8) onto which the collector (6) deposits the fluffed group of slices.

2. A fluffed portion preparation device according to claim 1, in which the collector (6) includes a paddle wheel (5) arranged to rotate about a horizontal axis transverse to the feed direction of the high speed conveyor, adjacent paddles (5a,5b) of the paddle wheel (5) forming a collecting pocket (4) which intercepts the flight of the slices (1) as they are projected from the downstream end of the high speed conveyor (2).

3. A fluffed portion preparation device according to claim 2, in which the paddle wheel (5) includes means to rotate and index it once the correct number of slices (1) have been collected in one of its collecting pockets (4) to bring the next, empty, pocket (4) into the line of flight of the slices being projected from the downstream end of the high speed conveyor (2), and to deposit a previously collected fluffed group of slices onto the output conveyor (8).

4. A fluffed portion preparation device according to claim 3, in which the upper part of the paddle wheel (5) moves in the same direction as that of the slices leaving the downstream end of a high speed conveyor and, in this case, the collector (6) includes a stationary shield (7) to prevent fluffed groups of slices from leaving their collecting pocket (4) until the collecting pocket (4) containing that group of slices has been indexed around to the lower half of the paddle wheel (5) so that the slices (1) can then fall under gravity onto the output conveyor (8).

5. A fluffed portion preparation device according to claim 2, 3 or 4, in which the paddles (5a, 5b) of the paddle wheel (5) are made from an array of thin bars or strips or include cut-out portions to reduce the surface area which is in contact with the fluffed group of slices.

6. A fluffed portion preparation device according to claim 2, 3 or 4, in which the collector (6) includes a flexible strip of material (9) connected between the free ends of adjacent paddles (5a, 5b) to form a flexible collecting pocket (4).

7. A fluffed portion preparation device according to any one of the preceding claims, in which the high speed conveyor (2) is arranged to receive slices (1) directly from the output of a slicing machine.

8. A method of preparing fluffed groups of slices comprising cutting thin slices of a product with a slicing machine and allowing them to fall under gravity onto a conveyor travelling at high speed so that as the slices of product fall onto it they tend to slip and so adopt a generally random orientation, the speed of the high speed conveyor being sufficient to project the slices forwards off its downstream end;

intercepting the slices during their flight after they have been projected off the downstream end of the high speed conveyor in a collecting device, and,

emptying a collected group of slices out of the collecting device.

Fig.1.

Fig.2.

Fig.3.

**European Patent Office**

# EUROPEAN SEARCH REPORT

Application Number

EP    92 30 4099

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-2 030 848 (SAKURAZAWA)<br>* page 2, line 99 - page 3, line 86; figure 2 * | 1 | B65G47/20<br>B26D7/27<br>B26D7/28 |
| Y | | 2,3,5,7,8 | |
| Y | US-A-3 831 471 (REHLANDER)<br><br>* column 3, line 19 - column 4, line 10; figure 7 * | 2,3,5,7,8 | |

TECHNICAL FIELDS SEARCHED (Int. Cl.5 )

B26D
B65G
B65B

The present search report has been drawn up for all claims

| Place of search | Date of completion of the search | Examiner |
|---|---|---|
| THE HAGUE | 17 AUGUST 1992 | GARELLA M.G.C.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)